(19) **Europäisches Patentamt**

**European Patent Office**

**Office européen des brevets**

(11) **EP 0 679 168 B2**

(12) **NEW EUROPEAN PATENT SPECIFICATION**

(45) Date of publication and mention
of the opposition decision:
**03.12.2003 Bulletin 2003/49**

(45) Mention of the grant of the patent:
**28.06.2000 Bulletin 2000/26**

(21) Application number: **94931469.4**

(22) Date of filing: **18.11.1994**

(51) Int Cl.⁷: **C08J 9/33**, C08J 9/35
// C08L75:04

(86) International application number:
**PCT/BE94/00088**

(87) International publication number:
**WO 95/014055 (26.05.1995 Gazette 1995/22)**

(54) **AGGLOMERATED POLYURETHANE FOAM AND METHOD FOR MAKING THIS FOAM**

AGGLOMERIETER POLYURETHANSCHAUMSTOFF UND HERSTELLUNGSVERFAHREN

MOUSSE POLYURETHANE AGGLOMEREE ET SON PROCEDE DE FABRICATION

(84) Designated Contracting States:
**AT BE CH DE DK ES FR GB IT LI NL SE**

(30) Priority: **18.11.1993 BE 9301273**

(43) Date of publication of application:
**02.11.1995 Bulletin 1995/44**

(73) Proprietor: **RECTICEL**
**1200 Brussels (BE)**

(72) Inventors:
• **DU PREZ, Eddie**
**B-9660 Brakel (BE)**
• **DE CLERQ, Yvan**
**B-9270 Laarne (BE)**
• **VAN DE VELDE, Dirk**
**B-9230 Massemen (BE)**

(74) Representative: **Claeys, Pierre et al**
**Gevers & Vander Haeghen,**
**Intellectual Property House,**
**Brussels Airport Business Park**
**Holidaystraat 5**
**1831 Diegem (BE)**

(56) References cited:
EP-A- 0 350 507    DE-A- 2 719 714
FR-A- 1 241 750    GB-A- 934 345
GB-A- 1 029 961    US-A- 408 703
US-A- 4 385 131    US-A- 4 438 221
US-A- 4 591 469    US-A- 4 666 646

• DATABASE WPI Week 8226, 19 May 1982
Derwent Publications Ltd., London, GB; AN
82-53120E 'Polyurethane foam chip production.'
& JP,A,57 080 032 (OKAZAKI URETHANE KO.)
• Database WPI week 8226,19.May 1982, AN
82-53120E "Polyurethane Foam Chip
Production" & JP-A-57080032
• B.Gnauck, P.Fründt, "Einstieg in die
Kunststoffchemie", Carl Hanser Verlag,
München/Wien, 3.Auflage, 1991, p.248-250
• Datenblätter "Rebond-Systeme", Stand 10/87
• Kunststoffhandbuch Polyurethane 7, G.
Oertel(ed.), Carl Hansen Verlag München, new
edition 1983, page 186
• In Touch Bulletin of The Polyurethane Foam
Association, Vol. 1,Number 4, November 1991.

EP 0 679 168 B2

**Description**

This invention relates to an agglomerated polyurethane foam consisting mainly of soft polyurethane foam particles bonded to one another by means of glue.

Such agglomerated polyurethane foams are already known in practice. These known agglomerated foams are made of waste produced when cutting gross blocks of polyurethane foam into cushions, mattresses, and the like.

According to the known method, this waste is ground into flakes in so-called flake mills. These flakes are treated with glue and are subsequently compressed into a mould to the desired density. Thereafter, the glue is allowed to cure before demoulding the agglomerated foam.

A drawback of the so obtained agglomerated foams is that they have a relatively high density, usually more than 50 kg/m$^3$, and hence a much too high hardness to be used as stuffing for sitting furniture or mattresses. In practice, they are therefore utilised in other fields for example as carpet-mats, acoustic foams, packing materials, or contour reinforcements of a sitting cushion or a mattress.

In the patent literature, such agglomerated polyurethane foams are for example disclosed in US-A-4.385.131 and FR-A-1 241 750.

US-A-4.385.131 discloses agglomerated polyurethane foams which could be used no longer only in the form of underlayment for carpet and rugs, but also in applications which required virgin polyurethane foam such as mattresses and cushions. However, the agglomerated foam is also made according to this US patent on the basis of shredded or ground polyurethane foam particles which require a relatively large amount of glue and which have further to be compressed in a relatively for-reaching way.

Also FR-A-1 241 750 discloses agglomerated polyurethane foams made on the basis of ground polyurethane foam particles. According to this patent publication, the foam particles are obtained by means of a granulator. In the examples given, the agglomerated foams have a density of at least 55 kg/m$^3$.

The invention has now as object to provide an agglomerated polyurethane foam, which, in contrast to the known agglomerated polyurethane foams, requires less glue and a less far reaching compression of the composing particles and which is thus better suited for being used as stuffing in for example cushions or mattresses, in other words for the same applications as the basic soft polyurethane foam used for making the agglomerated polyurethane foam according to the invention.

To this end, said particles have a minimally damaged cell structure, are obtained by application of a cutting technique from pieces of said soft polyurethane foam through the use of a machine set to produce particles having a volume comprised between 0.15 and 25 cm$^3$, and are bonded to one another by means of said glue in such a manner that the agglomerated polyurethane foam has a density comprised between 15 and 50 kg/m$^3$, the polyurethane foam particles having before being glued together a density between 12 and 50 kg/m$^3$ and the glue forming 3 to 20 % by weight of the agglomerated foam.

The use of polyurethane foam particles obtained by cutting polyurethane pieces for producing an agglomerated polyurethane foam is already disclosed in GB-B-934 345. This patent publication teaches however not the relatively low densities of the agglomerated polyurethane foams according to the invention. Moreover, it teaches a very broad range for the amount of glue to be used, the upper limit comprising even one part glue per part polyurethane foam, resulting thus also in a high foam density.

Due to the cutting technique used for producing the constituent particles of the agglomerated foam according to the invention, these particles have a minimally damaged cell structure. They can be obtained for example by cutting pieces of soft polyurethane foam or possibly by other cutting techniques, for example by blanking or sawing provided that only a minimum damage of the cell structure is caused by these cutting techniques. On the contrary, when grinding soft polyurethane foam into flakes, the cell structure is damaged considerably. Moreover, the so obtained particles of the known agglomerated polyurethane foams have further an irregular geometry showing all kinds of tears or ravels. As a result thereof, the known agglomerated polyurethane foams require a big quantity of glue and the constituent flakes provided with glue have to be compressed in a relatively far-reaching manner to obtain a sufficiently coherent entity. In practice, it is found that a compression up to more than 2.5 times the initial density of the basic foam is required to form a coherent entity, these known foam agglomerates having therefore, as already set forth hereinabove, a too high density and hardness for being used for example as stuffing for mattresses or cushions.

Surprisingly, the agglomerated polyurethane foams according to the invention have been found, however, to be not only suited for the same applications as the basic foam the component particles are obtained from, but moreover to show still better comfort properties.

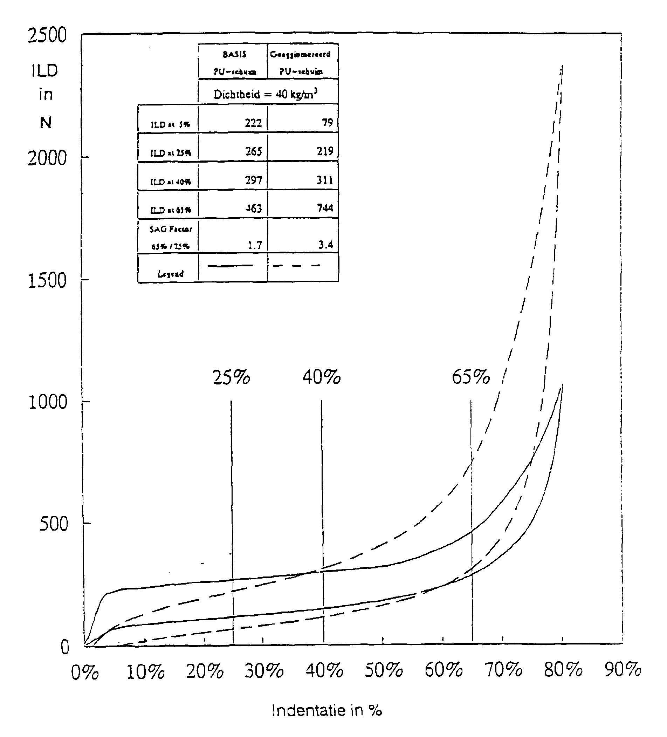

In particular these agglomerated foams have been found to have an improved comfort or "sag factor" and resilience for a similar density as the one used in sitting furniture and mattress industry and the hardness loss after fatigue has been found to be smaller. Figure 1 illustrates the difference in the compression curve of a normal polyether foam with a density of 40 kg/m$^3$ and an agglomerated foam with a similar hardness and density as obtained according to the method described hereinafter. Further, the resilience of these agglomerated foams according to the invention is higher than the resilience of the basic foam.

Preferably, the glue by means of which the particles of the agglomerated foam are bonded to one another is a polyurethane glue whereby the possible later recycling of this foam is simplified to a considerable extent.

The invention further also relates to a method for making such agglomerated polyurethane foams. As in the known method mentioned hereinabove use is made herein as starting material of particles of soft polyurethane foam with a density comprised between 12 and 50 kg/m$^3$, a polymerisable PU-glue is applied onto these particles in an amount comprised between 3 to 20 % by weight, calculated on the final weight of the agglomerated polyurethane foam, the particles thus provided with glue are compressed, this glue is polymerised with the particles in compressed state and the obtained agglomerated polyurethane foam is brought on atmospheric pressure after this polymerisation is substantially completed. In contrast to the mentioned known method, use is however made in the method according to the invention as starting material of substantially dust-free polyurethane foam particles with an average volume comprised between 0.15 and 25 cm$^3$, and preferably between 0.5 and 5 cm$^3$, which can be obtained by cutting pieces of said soft polyurethane foam and which show a minimum damage of the cell structure. Further, these particles are compressed in such a manner and said glue is applied in such a quantity that the agglomerated polyurethane foam has a density comprised between 15 and 50 kg/m$^3$, and preferably between 20 and 40 kg/m$^3$.

Because use is made of substantially dust-free particles with a minimally damaged cell structure and with an average volume comprised within the indicated limits, less glue is required on the one hand and, on the other hand, these particles have to be compressed less strongly to obtain a good adhesion. In this way, an agglomerated foam is obtained in the method according to the invention which, due to its relatively low density, is not only suited for being used for the same applications as the basic foam but which has moreover surprisingly even improved comfort properties.

The polyurethane particles used as starting material in the method according to the invention, can in particular be obtained to this end by cutting said pieces of polyurethane foam or by blanking these particles out of these pieces of polyurethane foam. Rotary cutting knives, the distance between the mutual knives of which being adjustable in function of the desired dimensions of the polyurethane particles, are particularly suitable.

Preferably, the pieces of polyurethane foam are decrusted in advance.

Further particularities and advantages of the invention will become apparent from the following description of some possible embodiments of the agglomerated polyurethane foam according to the invention and of a method for making this foam. This description is only given by way of example and is clearly not intended to limit the scope of the invention.

The agglomerated polyurethane foam according to the invention consists mainly of soft polyurethane foam particles bonded to one another by means of glue. Before being glued together, the polyurethane particles have an average volume comprised between 0.15 and 25 cm$^3$, and preferably between 0.5 and 5 cm$^3$. Essential for the agglomerated foam according to the invention is that these particles are glued together in such a manner that the agglomerated foam has a density comprised between 15 and 50 kg/m$^3$. As a result thereof, this foam can be used for the same applications as the basic foam the constituent particles of the foam are obtained from. Moreover, the agglomerated foam according to the invention has surprisingly, compared to this basic foam, a number of improved comfort properties including the higher "sag factor", the smaller hardness loss after fatigue and the higher resilience. Essential thereto is further also that the constituent particles of the foam have a minimally damaged cell structure like the structure which can be obtained by cutting pieces of soft polyurethane foam. Before discussing further the improved properties of the agglomerated polyurethane foam, a method for making such a foam according to the invention will first be described hereinafter.

In the method according to the invention use is made as starting material of substantially dust-free particles of soft polyurethane foam with a density comprised between 12 and 50 kg/m$^3$ and with an average volume comprised between 0.15 and 25 cm$^3$, and preferably between 0.5 and 5 cm$^3$. As stated already hereinabove, these particles may show only a minimum damage of the cell structure. Such particles can for example be obtained by cutting pieces of the basis polyurethane foam. Other cutting techniques by which the cell structure is sufficiently maintained and producing substantially no tears or ravels of the basic foam, such as for example by blanking the particles out of the polyurethane foam pieces, may however also be considered to this end. Possibly, the particles can also be sawn but then care should be taken that the dust and powder of the particles produced thereby is removed for example by providing a suitable suction or blowing device.

Preferably, these techniques are used to make particles with a regular geometry, for example in the shape of cubes, beams, prisms, cylinders etc. However, this geometry has not necessarily to consist of regular bodies, but has to consist of bodies delimited by planes or curves with a clean cutting surface. This is clearly not possible with a flake mill because such a mill produces flakes of irregular shapes, the cell structure of which is moreover considerably damaged. At the same time, the foam is subjected more to fatigue and more dust and powder is further produced.

In the method according to the invention, the pieces of polyurethane foam are for example formed by the waste obtained when cutting gross blocks of basic foam, which are preferably decrusted. Of course, it is to be preferred to decrust the gross block prior to cutting it. The particles obtained from such decrusted pieces of polyurethane foam are thus qualitatively identical to the foam processed for example into cushions or matresses.

To adhere the polyurethane particles to one another, they are for example first of all introduced into a mixing tub. Then a polymerisable glue is applied onto these particles, in particular by spraying it over the particles while stirring them by means of a stirring member. After continuing stirring for some time, the glue is uniformly divided over the surface of the particles.

In the method according to the invention, a relatively small amount of glue is required for bonding the particles to one another, since the cell structure of these particles is minimally damaged and since they are substantially dust-free. A regular geometry, i.e. the absence of tears and ravels, also contributes to a smaller need of glue. According to the invention 3 to 20 percent by weight and preferably 5 to 10 percent by weight of glue is applied onto the polyurethane foam particles, calculated on the final weight of the agglomerated polyurethane foam.

Preferably, use is made of a polyurethane glue, more particularly a polyurethane glue on the basis of a prepolymer of TDI and/or MDI with conventional ether polyols, such as used for the production of soft polyurethane foams. Usually, such prepolymers have a free NCO-groups content in percentage comprised between 5 and 25 % and preferably between 5 and 15 % for TDI-prepolymers and between 10 and 20 % for MDI-prepolymers. Such prepolymers have an analogous chemical structure as the foam itself which may be important later for a possible recycling.

After applying the glue over the particles, they are transferred from the mixing tub to a press having usually the shape of a right angled or cylindrical block. Use can also be made of very complex moulds such as for example for making moulded car seat cushions. In these moulds, the particles are compressed in particular in such a manner that the density of the agglomerated polyurethane foam is at least 0.8 times the density of the polyurethane foam from which the particles are obtained, or the average density if these particles are obtained from pieces of foam having different densities. This minimal compression is important to obtain a homogenous agglomerate with sufficiently good mechanical properties such as tear and tensile strength and also to obtain the advantages as to "sag factor" and hardness loss after fatigue.

The polyurethane foam particles, on the contrary, will normally not be compressed to such an extend that the density of the agglomerated foam would comprise more than 2.5 times the density of the foam from which the particles are obtained. Indeed, should this ratio be higher than 2.5, the hardness of the agglomerated foam becomes too high for replacing the conventional foams in the seating and mattress industry.

After curing of the glue, the agglomerated foam block can be demoulded or in other words can be brought back onto atmospheric pressure. For prepolymers having an excess of NCO-groups, the curing may be accelerated by blowing in for example saturated steam for about 5 min.

In conclusion, it has further to be mentioned that according to this process also post-consumer PU-soft foam wastes can be processed, such as for example from old mattresses and seats provided they are freed from foreign materials such as covering, springs, etc.

A number of examples of the invention are given hereinafter, wherein the improved properties of the agglomerated polyurethane foam according to the invention and therefore also the advantages of the method according to the invention, are clearly shown. To facilitate the comparison between the different agglomerated foams, use is always made in these examples of the same glue and concentration, namely 10 % prepolymer on the basis of TDI with a free NCO percentage of 15. As example four typical basic foams are respectively treated in Tables 1 to 4. The main properties, which are considered in this invention i.e. density, hardness, "sag factor", hardness loss after fatigue and resilience are compared between the basic foams and the agglomerated foams made therefrom. A cutting machine with three sets of rotative knives was used to produce the foam particles with clean cutting surfaces. In the tables, both the distance between the knives and the corresponding theoretical volume of the particles are indicated. The apparent density of the particles which are loosely piled up to one another is also mentioned as well as the used degree of compression, which is the ratio of the density of the obtained agglomerated foam to the density of the basic foam. Similar densities from different tables should be compared showing that different hardnesses can be achieved by starting from a similar density.

| Example | | | |
|---|---|---|---|
| Table Ref. | Column Ref. | Density in kg/m$^3$ | ILD 40 % in Newton |
| 1 | 2nd | 30.5 | 174 |
| 2 | 3rd | 31.8 | 141 |
| 3 | 2nd | 31.6 | 103 |
| 4 | 3rd | 30.6 | 92 |

TABLE No. 1

| Basic foam : Code T 30180 | | | | |
|---|---|---|---|---|
| Adjustment cutting knives : 8 X 8 X 8 mm = 0.51 cm$^3$ | | | | |
| Apparent density in kg/m$^3$ : 14.9 | | | | |
| (of cut foam particles) | | | | |
| Properties | | Basic foam | Agglomerated foam | |
| Density in kg/m$^3$ (ISO 845) | | 28.4 | 30.5 | 41 |
| ILD (ISO 2439 B) | 25 % | 152 | 118 | 156 |
| | 40 % | 188 | 174 | 235 |
| | 65 % | 355 | 394 | 569 |
| | Sag factor (65/25) | 2.3 | 3.3 | 3.6 |
| Fatigue - Load ponding test (ISO 3385) | | | | |
| Hardness loss in % at 40 % compression | | 33 | 28 | 27.4 |
| Resilience (ASTM D 3574 H) | | 45 | 50 | 53 |
| Degree of compression = $\dfrac{\text{Density agglomerated foam}}{\text{Density basic foam}}$ | | -- | 1.07 | 1.44 |

TABLE No. 2

| Basic foam : Code T 22110 | | | | | |
|---|---|---|---|---|---|
| Adjustment cutting knives : 8 X 4 X 24 mm = 0.77cm$^3$ | | | | | |
| Apparent density in kg/m$^3$ : 9.1 | | | | | |
| (of cut foam particles) | | | | | |
| Properties | | Basic foam | Agglomerated foam | | |
| Density in kg/m$^3$ (ISO 845) | | 19.9 | 26.6 | 31.8 | 40.6 |
| ILD (ISO 2439 B) | 25 % | 91 | 73 | 90 | 121 |
| | 40 % | 114 | 112 | 141 | 196 |
| | 65 % | 218 | 262 | 350 | 551 |
| | Sag factor (65/25) | 2.4 | 3.7 | 3.9 | 4.5 |
| Fatigue - Load ponding test (ISO 3385) | | | | | |
| Hardness loss in % at 40 % compression | | 42.5 | 38.1 | 31 | 24.5 |
| Resilience (ASTM D 3574 H) | | 45 | 50 | 49 | 53 |
| Degree of compression = $\dfrac{\text{Density agglomerated foam}}{\text{Density basic foam}}$ | | -- | 1.25 | 1.6 | 2.04 |

TABLE No. 3

| Basic foam : Code T 30120 | | | | |
|---|---|---|---|---|
| Adjustment cutting knives : 10 X 10 X 10 mm = 1 cm$^3$ | | | | |
| Apparent density in kg/m$^3$ : 15.3 | | | | |
| (of cut foam particles) | | | | |
| Properties | | Basic foam | Agglomerated foam | |
| Density in kg/m$^3$ (ISO 845) | | 28.1 | 31.6 | 44.5 |
| ILD (ISO 2439 B) | 25 % | 94 | 70 | 97 |
| | 40 % | 114 | 103 | 149 |
| | 65 % | 200 | 228 | 370 |

TABLE No. 3   (continued)

| Properties | | Basic foam | Agglomerated foam | | |
|---|---|---|---|---|---|
| | Sag factor (65/25) | 2.1 | 3.3 | 3.8 | |
| Fatigue - Load ponding test (ISO 3385) | | | | | |
| Hardness loss in % at 40 % compression | | 33.7 | 28.5 | 22.5 | |
| Resilience (ASTM D 3574 H) | | 50 | 52 | 53 | |
| Degree of compression = $\frac{\text{Density agglomerated foam}}{\text{Density basic foam}}$ | | -- | 1.12 | 1.58 | |

TABLE No. 4

| Basic foam: Code T 20070 | | | | | |
|---|---|---|---|---|---|
| Adjustment cutting knives : 10 X 10 X 10 mm = 1 cm$^3$ | | | | | |
| Apparent density in kg/m$^3$ : 10 | | | | | |
| (of cut foam particles) | | | | | |
| Properties | | Basic foam | Agglomerated foam | | |
| Density in kg/m$^3$ (ISO 845) | | 18.3 | 25 | 30.6 | 41.4 |
| ILD (ISO 2439 B) | 25 % | 60 | 50 | 60 | 78 |
| | g40 % | 75 | 74 | 92 | 128 |
| | 65% | 131 | 174 | 223 | 360 |
| | Sag factor (65/25) | 2.2 | 3.5 | 3.4 | 4.6 |
| Fatigue - Load ponding test (ISO 3385) | | | | | |
| Hardness loss in % at 40 % compression | | 35.5 | 35.6 | 29.3 | 23.5 |
| Resilience (ASTM D 3574 H) | | 46 | 52 | 51 | 52 |
| Degree of compression = $\frac{\text{Density agglomerated foam}}{\text{Density basic foam}}$ | | -- | 1.37 | 1.67 | 2.26 |

**Claims**

1. An agglomerated polyurethane foam consisting mainly of soft polyurethane foam particles bonded to one another by means of glue forming 3 to 20% by weight of the agglomerated foam, the agglomerated foam having a density comprised between 15 and 50 kg/m$^3$ and the polyurethane foam particles having before being glued together a density between 12 and 50 kg/m$^3$, **characterised in that** said particles have a minimally damaged cell structure and are obtained by application of a cutting technique from pieces of said soft polyurethane foam through the use of a machine set to produce particles having a volume comprised between 0.15 and 25 cm$^3$.

2. An agglomerated polyurethane foam according to claim 1, **characterised in that** said glue is a polyurethane glue.

3. An agglomerated polyurethane foam according to claim 1 or 2, **characterised in that** it has a density comprised between 20 and 40 kg/m$^3$.

4. An agglomerated polyurethane foam according to any one of the claims 1 to 3, **characterised in that** said polyurethane foam particles are obtained through the use of a machine set to produce particles having a volume comprised between 0.5 and 5 cm$^3$.

5. A method for making agglomerated polyurethane foam according to any one of the claims 1 to 4, in which method use is made as starting material of particles of soft polyurethane foam with a density comprised between 12 and 50 kg/m$^3$, a glue is applied onto these particles in an amount comprised between 3 and 20 % by weight, calculated on the final weight of the agglomerated polyurethane foam, the particles thus provided with glue are compressed in such a manner that the agglomerated polyurethane foam has a density comprised between 15 and 50 kg/m$^3$, the applied glue is cured with the particles in compressed state and the obtained agglomerated polyurethane foam is brought on atmospheric pressure, **characterised in that** use is made as starting material of substantially dust-free polyurethane foam particles which show a minimum damage of the cell structure and which are obtained by application of a cutting technique from pieces of said soft polyurethane foam through the use of a machine set to produce particles having a volume comprised between 0.15 and 25 cm$^3$.

6. A method according to claim 5, **characterised in that** said polyurethane foam particles are obtained through the use of a machine set to produce particles having a volume comprised between 0.5 and 5 cm$^3$.

7. A method according to claim 5 or 6, **characterised in that** said particles are compressed in such a manner and said glue is applied in such a quantity that the agglomerated polyurethane foam has a density comprised between 20 and 40 kg/m$^3$.

8. A method according to any one of the claims 5 to 7, **characterised in that** said polyurethane foam particles are compressed in a manner such that the density of the agglomerated polyurethane foam is at least 0.8 times the density of said polyurethane foam pieces and in particular maximum 2.5 times the density of these polyurethane foam pieces.

9. A method according to any one of the claims 5 to 8, **characterised in that** said pieces of polyurethane foam are decrusted in advance.

10. A method according to any one of the claims 5 to 9, **characterised in that** 5 to 10 percent by weight glue is applied onto the polyurethane foam particles, calculated on the final weight of the agglomerated polyurethane foam.

11. A method according to any one of the claims 5 to 10, **characterised in that** said glue is sprayed over the polyurethane foam particles while stirring these latter particles.

12. A method according to any one of the claims 5 to 11, **characterised in that** use is made of a polyurethane glue.

13. A method according to claim 12, **characterised in that** the used polyurethane glue is a polyurethane glue on the basis of a prepolymer of TDI and/or MDI with ether polyols used for producing soft PU foams.

14. A method according to claim 12 or 13, **characterised in that** the used polyurethane glue is a polyurethane glue determined on the basis of a prepolymer, the percentage free NCO-groups of which is comprised between 5 and 25%.

15. A method according to any one of the claims 5 to 14, **characterised in that** the used glue is a polymerisable glue.


**Patentansprüche**

1. Agglomerierter Polyurethanschaum, der hauptsächlich aus weichen Polyurethanschaumpartikeln besteht, die miteinander durch 3 bis 20 % eines Leims, bezogen auf den agglomerierten Schaum, verbunden sind, wobei der agglomerierte Schaum eine Dichte von 15 bis 50 kg/m$^3$ aufweist und wobei die Polyurethanschaumpartikel vor dem Klebevorgang eine Dichte von 12 bis 50 kg/m$^3$ aufweisen, **dadurch gekennzeichnet, daß** diese Partikel eine minimal zerstörte Zellstruktur aufweisen und hergestellt werden durch Anwendung von Schneidetechnik aus Teilen des weichen Polyurethanschaums durch die Verwendung einer Maschine, die so eingestellt ist, daß sie Partikel mit einem Volumen von 0,15 bis 25 cm$^3$ herstellt.

2. Agglomerierter Polyurethanschaum nach Anspruch 1, **dadurch gekennzeichnet, daß** der Leim ein Polyurethanleim ist.

3. Agglomerierter Polyurethanschaum nach Anspruch 1 oder 2, **dadurch gekennzeichnet, daß** er eine Dichte von 20 bis 40 kg/m$^3$ aufweist.

4. Agglomerierter Polyurethanschaum nach einem der Ansprüche 1 bis 3, **dadurch gekennzeichnet, daß** die Polyurethanschaumpartikel durch die Verwendung einer Maschine erhalten werden, die derart eingestellt ist, daß sie Partikel mit einem Volumen von 0,5 bis 5 cm$^3$ herstellt.

**5.** Verfahren zur Herstellung von agglomeriertem Polyurethanschaum nach einem der Ansprüche 1 bis 4, wobei in dem Verfahren als Ausgangsmaterial Partikel von weichem Polyurethanschaum mit einer Dichte von 12 bis 50 kg/m$^3$ verwendet werden, ein Leim auf diese Partikel aufgebracht wird, in einer Menge von 3 bis 20 Gew.-%, berechnet auf das Endgewicht des agglomerierten Polyurethanschaumes, die derart mit Leim versehenen Partikel derart komprimiert werden, daß der agglomerierte Polyurethanschaum eine Dichte von 15 bis 50 kg/m$^3$ aufweist, der Leim mit den Partikeln im zusammengepressten Zustand gehärtet und der erhaltene agglomerierte Polyurethanschaum Atmosphärendruck ausgesetzt wird, **dadurch gekennzeichnet, daß** als Ausgangsmaterial im wesentlichen staubfreie Polyurethanschaumpartikel verwendet werden, die eine minimale Zerstörung der Zellstruktur aufweisen und die durch Anwendung von Schneidetechnik aus Teilen des weichen Polyurethanschaums durch die Verwendung einer Maschine erhalten werden, die derart eingestellt ist, daß sie Partikel mit einem Volumen von 0,15 bis 25 cm$^3$ herstellt.

**6.** Verfahren nach Anspruch 5, **dadurch gekennzeichnet, daß** die Polyurethanschaumpartikel durch die Verwendung einer Maschine erhalten werden, die derart eingestellt ist, daß die hergestellten Partikel ein Volumen von 0,5 bis 5 cm$^3$ aufweisen.

**7.** Verfahren nach Anspruch 5 oder 6, **dadurch gekennzeichnet, daß** die Partikel derart komprimiert werden und der Leim in einer Menge aufgebracht wird, daß der agglomerierte Polyurethanschaum eine Dichte von 20 bis 40 kg/m$^3$ aufweist.

**8.** Verfahren nach einem der Ansprüche 5 bis 7, **dadurch gekennzeichnet, daß** die Polyurethanschaumpartikel derart komprimiert werden, daß die Dichte des agglomerierten Polyurethanschaums mindestens 0,8 mal der Dichte erwähnter Polyurethanschaumteilchen entpricht und insbesondere höchstens 2,5 mal der Dichte dieser Polyurethanschaumteilchen entspricht.

**9.** Verfahren nach einem der Ansprüche 5 bis 8, **dadurch gekennzeichnet, daß** die Polyurethanschaumteilchen zuvor entkrustet werden.

**10.** Verfahren nach einem der Ansprüche 5 bis 9, **dadurch gekennzeichnet, daß** 5 bis 10 Gew.%, bezogen auf das Endgewicht des agglomerierten Polyurethanschaums, Leim auf die Polyurethanschaumpartikel aufgebracht werden.

**11.** Verfahren nach einem der Ansprüche 5 bis 10, **dadurch gekennzeichnet, daß** der Leim über die Polyurethanschaumpartikel gesprüht wird, während diese gerührt werden.

**12.** Verfahren nach einem der Ansprüche 5 bis 11, **dadurch gekennzeichnet, daß** ein Polyurethanleim verwendet wird.

**13.** Verfahren nach Anspruch 12, **dadurch gekennzeichnet, daß** der verwendete Polyurethanleim ein Polyurethanleim auf der Basis eines Präpolymers aus TDI und/oder MDI mit Etherpolyolen ist, der zur Herstellung von weichen PU-Schäumen verwendet wird.

**14.** Verfahren nach Anspruch 12 oder 13, **dadurch gekennzeichnet, daß** der verwendete Polyurethanleim ein Polyurethanleim mit 5 bis 25 % freien NCO-Gruppen, bestimmt auf der Basis des Präpolymers, ist.

**15.** Verfahren nach einem der Ansprüche 5 bis 14, **dadurch gekennzeichnet, daß** der verwendete Leim ein polymerisierbarer Leim ist.

**Revendications**

**1.** Mousse de polyuréthanne agglomérée constituée principalement de particules de mousse de polyuréthanne molle liées l'une à l'autre au moyen de colle formant 3 à 20% en poids de mousse agglomérée, la mousse agglomérée ayant une densité comprise entre 15 et 50 kg/m$^3$ et les particules de mousse de polyuréthanne ayant avant leur collage mutuel une densité comprise entre 12 et 50 kg/m$^3$, **caractérisée en ce que** lesdites particules présentent une structure cellulaire endommagée de manière minimale et sont obtenues par application d'une technique de coupe à partir de pièces de la mousse de polyuréthanne molle par l'utilisation d'une machine réglée pour produire des particules ayant un volume compris entre 0,15 et 25 cm$^3$.

**2.** Mousse de polyuréthanne agglomérée suivant la revendication 1, **caractérisée en ce que** la colle est une colle de polyuréthanne.

**3.** Mousse de polyuréthanne agglomérée suivant l'une des revendications 1 et 2, **caractérisée en ce qu'**elle a une densité comprise entre 20 et 40 kg/m$^3$.

**4.** Mousse de polyuréthanne agglomérée suivant l'une quelconque des revendications 1 à 3, **caractérisée en ce que** les particules de mousse de polyuréthanne sont obtenues par l'utilisation d'une machine réglée pour produire des particules ayant un volume compris entre 0,5 et 5 cm$^3$.

**5.** Procédé de fabrication d'une mousse de polyuréthanne agglomérée suivant l'une quelconque des revendications 1 à 4, dans lequel on fait usage, comme matière de départ, de particules de mousse de polyuréthanne molle ayant une densité comprise entre 12 et 50 kg/m$^3$, une colle étant appliquée sur ces particules en une quantité comprise entre 3 à 20% en poids calculée sur le poids final de la mousse de polyuréthanne agglomérée, les particules ainsi pourvues de colle étant comprimées de telle manière que la mousse de polyuréthanne agglomérée a une densité comprise entre 15 et 50 kg/m$^3$, la colle appliquée étant durcie avec les particules à l'état comprimé et la mousse de polyuréthanne agglomérée obtenue étant amenée à la pression atmosphérique, **caractérisé en ce qu'**on utilise, comme matière de départ, des particules de mousse de polyuréthanne sensiblement exemptes de poussières, qui montrent un endommagement minimum de la structure cellulaire et qui sont obtenues par application d'une technique de coupe à partir de pièces de la mousse de polyuréthanne molle par l'utilisation d'une machine réglée pour produire des particules ayant un volume compris entre 0,15 et 25 cm$^3$.

**6.** Procédé suivant la revendication 5, **caractérisé en ce que** les particules de mousse de polyuréthanne sont obtenues par l'utilisation d'une machine réglée pour produire des particules ayant un volume compris entre 0,5 et 5 cm$^3$.

**7.** Procédé suivant l'une des revendications 5 et 6, **caractérisé en ce que** les particules sont comprimées d'une manière telle et la colle est appliquée en une quantité telle que la mousse de polyuréthanne agglomérée a une densité comprise entre 20 et 40 kg/m$^3$.

**8.** Procédé suivant l'une quelconque des revendications 5 à 7, **caractérisé en ce que** les particules de mousse de polyuréthanne sont comprimées d'une manière telle que la densité de la mousse de polyuréthanne agglomérée est d'au moins 0,8 fois la densité des pièces de mousse de polyuréthanne et en particulier d'au maximum 2,5 fois la densité de ces pièces de mousse de polyuréthanne.

**9.** Procédé suivant l'une quelconque des revendications 5 à 8, **caractérisé en ce que** les pièces de mousse de polyuréthanne sont débarrassées de leur croûte à l'avance.

**10.** Procédé suivant la revendication 9, **caractérisé en ce que** 5 à 10% en poids de colle sont appliqués sur les particules de mousse de polyuréthanne, ce qui est calculé sur le poids final de la mousse de polyuréthanne agglomérée.

**11.** Procédé suivant l'une quelconque des revendications 5 à 10, **caractérisé en ce que** la colle est pulvérisée sur les particules de mousse de polyuréthanne pendant l'agitation de ces dernières particules.

**12.** Procédé suivant l'une quelconque des revendications 5 à 11, **caractérisé en ce qu'**on fait usage d'une colle de polyuréthanne.

**13.** Procédé suivant la revendication 12, **caractérisé en ce que** la colle de polyuréthanne utilisée est une colle de polyuréthanne à base d'un prépolymère de TDI et/ou de MDI avec des éther-polyols utilisés pour produire des mousses de PU molles.

**14.** Procédé suivant l'une des revendications 12 et 13, **caractérisé en ce que** la colle de polyuréthanne utilisée est une colle de polyuréthanne déterminée sur la base d'un prépolymère, dont le pourcentage de groupes NCO libres est compris entre 5 et 25%.

**15.** Procédé suivant l'une quelconque des revendications 5 à 14, **caractérisé en ce que** la colle utilisée est une colle polymérisable.

| | BASIS PU-schuim | Geagglomereerd PU-schuim |
|---|---|---|
| Dichtheid = 40 kg/m$^3$ | | |
| ILD at 5% | 222 | 79 |
| ILD at 25% | 265 | 219 |
| ILD at 40% | 297 | 311 |
| ILD at 65% | 463 | 744 |
| SAG Factor 65% / 25% | 1.7 | 3.4 |
| Legend | ———— | — — — |

Indentatie in %